(19) Europäisches Patentamt
European Patent Office
Office européen des brevets

(11) **EP 4 257 958 A1**

(12) **EUROPEAN PATENT APPLICATION**

(43) Date of publication:
**11.10.2023 Bulletin 2023/41**

(21) Application number: **22305453.7**

(22) Date of filing: **05.04.2022**

(51) International Patent Classification (IPC):
***G01N 21/64*** *(2006.01)*

(52) Cooperative Patent Classification (CPC):
**G01N 21/6489; G01N 21/6408**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Centre national de la recherche scientifique**
  **75016 Paris (FR)**
- **Ecole Polytechnique**
  **91120 Palaiseau (FR)**
- **TotalEnergies OneTech**
  **92400 Courbevoie (FR)**

- **Institut Photovoltaïque d'Ile de France - IPVF**
  **91120 Palaiseau (FR)**
- **Electricité de France**
  **75008 Paris (FR)**

(72) Inventor: **POPLAWSKI, Mateusz**
  **75015 PARIS (FR)**

(74) Representative: **Hautier IP**
  **20, rue de la Liberté**
  **06000 Nice (FR)**

Remarks:
Amended claims in accordance with Rule 137(2) EPC.

(54) **METHOD AND DEVICE FOR DETERMINING THE EFFECTIVE ELECTRON LIFETIME IN A SAMPLE**

(57) The present invention concerns a method for measuring the effective electron lifetime in a sample, the method comprising:
- emitting an excitation light beam, the excitation light beam having a frequency modulated by a frequency modulation,
- detecting the photoluminescence light emitted by the sample illuminated by the excitation light beam,
- determining the phase shift between the excitation light beam and the detected photoluminescence light for each frequency emission value, and
- deducing the effective electron lifetime based on each determined phase shift.

FIG.1

EP 4 257 958 A1

**Description**

TECHNICAL FIELD OF THE INVENTION

The present invention concerns a method for determining the effective electron lifetime in a sample. The present invention also relates to a device adapted to carrying out such method for determining.

BACKGROUND OF THE INVENTION

With the development of photovoltaic production, the control of the quality of each step of a manufacturing method of a cell is a key issue requiring in-situ measurements.

It is known that the effective electron lifetime is a good indicator of the quality of an assembly of semiconductor layers that results from carrying out a step of such manufacturing method.

It appears that the frequency response of photoluminescence emission in a semiconductor sample is influenced by the effective electron lifetime.

As it is easy to induce and capture photoluminescence light in solar cells at different stages of processing, modulated photoluminescence (also named MPL) technique is often used. It is a non-contact method allowing to measure such effective electron lifetime by recording the frequency dependence of the photoluminescence phase shift with respect to the time-modulated light excitation.

However, known MPL techniques are quite slow in so far as they need a long time period for a full MPL measurement.

SUMMARY OF THE INVENTION

There is a need for a faster method for determining the effective electron lifetime in a sample.

To this end, the specification describes a method for measuring the effective electron lifetime in a sample, the method comprising:

- emitting an excitation light beam, the excitation light beam having a frequency modulated by a frequency modulation,
- detecting the photoluminescence light emitted by the sample illuminated by the excitation light beam,
- determining the phase shift between the excitation light beam and the detected photoluminescence light for each frequency emission value, and
- deducing the effective electron lifetime based on each determined phase shift.

Such method for determining can notably be compared with MPL techniques using Fourier transforms.

These techniques determine the phase shift at a single frequency and excess carrier concentrations (determined via laser current). Therefore, such techniques are relatively long to carry out and are also limited in being a discrete measurement.

By contrast, the proposed method uses frequency modulation to measure the phase shift with a continuous frequency to reduce to measurement time and enabling to carry out a more complete measurement.

According to further aspects of the method for determining, which are advantageous but not compulsory, the method for determining might incorporate one or several of the following features, taken in any technically admissible combination:

- the frequency emission has at each time a value comprised between 200 Hz and 800 Hz, preferably between 215 Hz and 615 Hz.
- the frequency modulation is a cosine modulation.
- the frequency emission varies according to the following formula:

$$F_{freq}(t) = C_{f1} - R_{f1}cos(2\pi f_1 t)$$

where:

- $F_{freq}(t)$ is the frequency emission at a time t,
- $C_{f1}$ is the core frequency of the frequency emission,
- $R_{f1}$ is the range from the core frequency of the frequency modulation, and
- $f_1$ is the frequency of the frequency modulation.

- the core frequency $C_{f1}$ is comprised between 300 Hz and 600 Hz, the range from the core frequency $R_{f1}$ is comprised between 200 Hz and 500 Hz, preferably and the frequency $f_1$ of the frequency modulation is comprised between 0.05 Hz and 10 Hz.
- the light beam has an intensity modulated by an intensity modulation and during the step for determining, the phase shift between the excitation light beam and the detected photoluminescence light is determined both for each frequency emission value and for each intensity value.
- the intensity modulation is a cosine modulation.
- the intensity varies according to the following formula:

$$\frac{I(t)}{I_{MAX}} = C_{f2} - R_{f2}cos(2\pi f_2 t)$$

where:

- $I(t)$ is the instantaneous intensity,
- $I_{MAX}$ is the maximum intensity value of the light beam that can be generated,
- $C_{f2}$ is the middle intensity,
- $R_{f2}$ is the range from the middle intensity of the intensity modulation, and

- • $f_2$ is the frequency of the intensity modulation.

- the middle intensity $C_{f2}$ is comprised between 0.3 and 0.6, the range from the middle intensity $R_{f2}$ is comprised between 0.2 and 0.4 and the frequency of the intensity modulation $f_2$ is comprised between 0.05 Hz and 5 Hz.
- the step for deducing comprises using a wavelet transform.
- the step for deducing comprises calculating a correlation between the excitation light beam and the detected photoluminescence light.
- the step for deducing comprises calculating a magnitude-squared wavelet coherence between the excitation light beam and the detected photoluminescence light.
- the step for detecting is carried out by a detector comprising a compound parabolic concentrator.
- the sample is an area of interest of a circuitry.

The specification also relates to a device for measuring the effective electron lifetime in a sample, the device for measuring comprising:

- a light source adapted to emit an excitation light beam, the excitation light beam having a frequency emission modulated by a modulation, the frequency emission having a value comprised between 200 Hz and 600 Hz,
- a detector adapted to detect the photoluminescence light beam emitted by the sample illuminated by the excitation light beam, and
- a processing unit adapted to:

    - determine the phase shift between the excitation light beam and the detected photoluminescence light for each frequency emission value, and
    - deduce the effective electron lifetime based on each determined phase shift.

BRIEF DESCRIPTION OF THE DRAWINGS

The invention will be better understood on the basis of the following description, which is given in correspondence with the annexed figures and as an illustrative example, without restricting the object of the invention. In the annexed figures:

- figure 1 is a schematic representation of a device for measuring the effective electron lifetime in a sample, and
- figure 2 is a schematic representation of a use of the device for measuring of figure 1 in a PECVD reactor.

DETAILED DESCRIPTION OF THE PREFERRED EMBODIMENTS

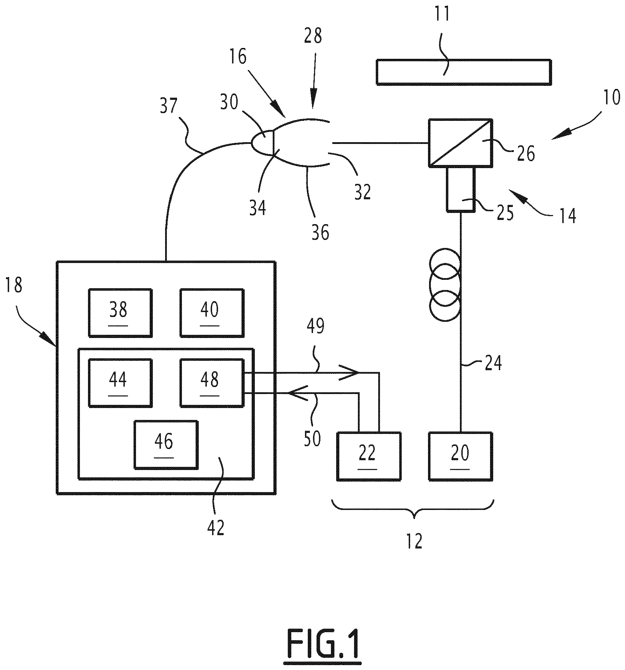

A device for measuring 10 the effective electron lifetime in a sample 11 is represented on figure 1.

The device for measuring 10 uses a modulated photoluminescence technique to measure the effective electron lifetime.

Such device for measuring 10 is adapted to operate in situ.

The sample 11 is, for instance, an area of interest of a circuitry, such as a semiconductor area.

The area of interest may depend according to the context.

For instance, the area of interest is a part of an assembly of layers devoted to form a photovoltaic cell.

The effective electron lifetime is the amount of time an electron remains within the conduction band between photon absorption (photon with higher energy than band gap) and photon emission at the bandgap energy.

The device for measuring 10 comprises a light generator 12, an optical system 14, a detector 16 and a processing unit 18.

The light generator 12 comprises a light source 20 and a command unit 22.

The light source 20 is a laser source.

For instance, the light source 20 is a laser diode.

The light source 20 is adapted to generate light beam with a wavelength comprised between 400 nm and 1.1 $\mu$m, the wavelength used in the present example is 785 nm.

The command unit 22 is adapted to command the light source 20 by sending command signals to the light source 20.

Notably, the command unit 22 is adapted to introduce modulations in the intensity and the frequency emitting of the light source 20.

The optical system 14 is adapted to transport the light beam emitted by the light source 20 towards the sample 11.

As a specific example, in the case of figure 1, the optical system 14 comprises a fiber 24, a beam profiler 25 and a separator 26.

The fiber 24 is arranged to convey the light beam from the output of the light source 20 to the beam profiler 25.

The beam profiler 25 is a top hat beam profiler converting the light beam from the output of the light source 20 with a Gaussian intensity profile to a collimated beam with a top hat.

The separator 26 is here a shortpass Dichroic Beamsplitting cube with a cut-off wavelength.

The separator 26 defines two light paths according to the polarization: a transmitting path for light below the cut-off wavelength and a reflecting path for light with a higher wavelength than the cut-off wavelength.

The cut-off wavelength is here equal to 950 nm.

In the present case, the separator 26 is arranged so that the transmitting path corresponds to a light outputted from the beam profiler 25 and sent to the sample 11 while the reflecting path corresponds to a light coming from the sample 11 and sent to the detector 16.

The detector 16 is adapted to detect the photoluminescence light beam emitted by the sample 11, when illuminated by the excitation beam light.

According to the case of figure 1, the detector 16 comprises a compound parabolic concentrator 28 and a photodetector 30.

A compound parabolic concentrator 28 is a reflective, non-imaging optical device, which employs specifically configured parabolic properties to take advantage of the maximum concentration of light energy.

More specifically, such compound parabolic concentrator 28 comprises an input end 32, an output end 34 and inner walls 36 linking the input end 32 to the output end 34. The input end 32 is larger than the output end 34 to collect efficiently divergent light. Such divergent light is then reflected and concentrated by the inner walls 36 thanks to their rotated parabolic shape. This enables that a relatively large part of the photoluminescence light beam emitted by the sample 11 be collected at the output end 34.

In practice, it is advantageous that an optical filter be provided at the input end 32 of the compound parabolic concentrator 28. Such optical filter is, for instance, a 785 nm laser line filter.

The photodetector 30 is positioned at the output end 34 of the compound parabolic concentrator 28.

The photodetector 30 is, for instance, a photodiode. In particular, an InGaAs photodiode is appropriate in this context.

The processing unit 18 is linked to the photodetector 30 by a coaxial cable 37.

The processing unit 18 comprises a calculator 38 adapted to process data, notably by carrying out calculations and memories 40 adapted to store data.

The calculator 38 is, for instance, a monocore or multicore processor (such as a CPU, a GPU, a microcontroller and a DSP), a programmable logic circuitry (such as an ASIC, a FPGA, a PLD and PLA), a state machine, gated logic or discrete hardware components.

In the present case, the processing unit 18 also comprises an electronic processing subunit 42.

For instance, the electronic processing subunit 42 comprises an amplifier 44, a low-pass filter 46 and a voltage data logger 48.

The amplifier 44 is adapted to amplify an incoming signal, the low-pass filter 46 is adapted to apply a low pass filter to an incoming signal and the voltage data logger 48 has the role of a function generator.

More precisely, the voltage data logger 48 is adapted to send modulations in the intensity and the frequency emitting of the light source 20 to the command unit 22 via a first coaxial cable 49 and to record the signal of the laser 20 via a second coaxial cable 50.

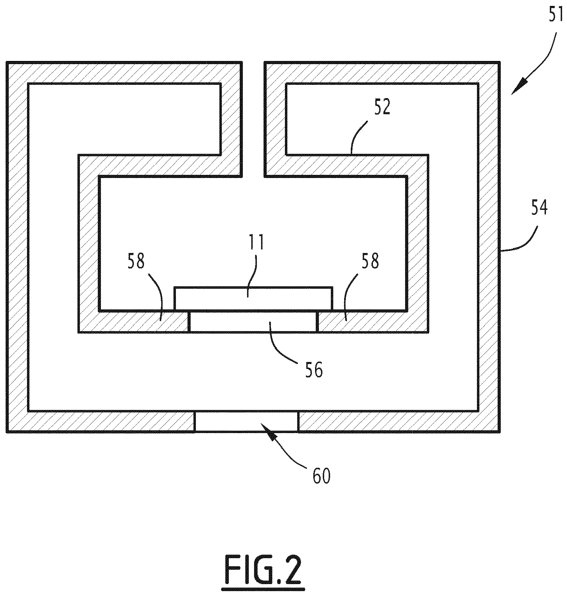

An example of operating of the device for measuring 10 is now described in reference to figure 2, which illustrates a use of the device for measuring 10 in a reactor 51.

The reactor 51 is an apparatus in which circuitry is built.

For instance, the reactor 51 is a PECVD reactor.

PECVD stands for plasma-enhanced chemical vapor deposition and designates a chemical vapor deposition process used to deposit thin films from a gas state to a solid state on a substrate.

The reactor 51 comprises an inner chamber 52 inserted in an external chamber 54.

The sample 11 is formed in the inner chamber 52.

In the present case, the reactor 51 is adapted for interacting with the device for measuring 10.

For this, the inner chamber 52 comprises an observation aperture 56 and a sample holder 58.

The observation aperture 56 is within the sample holder 58 upon which the sample 11 is placed.

The observation aperture 56 is accessible via a window 60 connected to the external chamber 54.

The window 60 is, in the present example, a vacuum compatible window 60.

The window 60 is used for illumination of the sample 11 and collection of the emitted photoluminescence of sample 11.

The device for determining is adapted to carry out a method for measuring the effective electron lifetime in a sample 11. This method is described hereinafter.

The method comprises a step for emitting, a step for detecting, a step for determining and a step for deducing.

During the step for emitting, the light source 20 emits an excitation light beam.

According to the example, the excitation light beam has a frequency component modulated by a frequency modulation.

In the presence case, the frequency modulation is superimposed on top of a wave used to vary the overall intensity of the light illumination on the sample 11.

The instantaneous frequency emission therefore varies over time.

In the present example, the frequency modulation is a cosine modulation.

Varying the instantaneous frequency in a cosine manner allows for an emission signal with a continuous instantaneous frequency ranging between two values to be created.

In the present case, the instantaneous frequency emission has at each point in time a value preferably between 200 Hz and 800 Hz, more preferably between 215 Hz and 615 Hz.

The instantaneous frequency emission, when represented with a wave function, can thus be written mathematically according to the following equation:

$$F_{freq}(t) = C_{f1} - R_{f1} cos(2\pi f_1 t)$$

Where:

- $F_{freq}(t)$ is the instantaneous frequency emission,
- $C_{f1}$ is the core frequency of the frequency emission,
- $R_{f1}$ is the range from the core frequency for the frequency modulation, and
- $f_1$ is the frequency of the frequency modulation.

The core frequency $C_{f1}$ is comprised between 300 Hz and 600 Hz, preferably, as in the present case, equal to 400 Hz.

The range from the core frequency $R_{f1}$ is comprised between 200 Hz and 500 Hz, preferably, as in the present case, equal to 200 Hz.

The frequency of the frequency modulation $f_1$ is comprised between 0.05 Hz and 10 Hz, preferably comprised between 0.5 Hz and 2 Hz.

In this specific case, the frequency of the frequency modulation $f_1$ is equal to 2 Hz.

In the described example, the excitation light beam has an intensity modulated by an intensity modulation.

The intensity is there defined as the optical power of the light beam at the output of the light source 20.

The instantaneous intensity therefore varies over time.

In the present example, the intensity modulation is a cosine modulation.

Varying the intensity in a cosine manner allows for a signal with a continuous instantaneous intensity ranging between two values to be created.

In the present case, the ratio of the instantaneous intensity over the maximum intensity that the light source 20 can generate is comprised between 0 and 0.9, preferably between 0.1 and 0.8. Such ratio is chosen to avoid the presence of hysteresis.

The instantaneous intensity can thus be written mathematically according to the following equation:

$$\frac{I(t)}{I_{MAX}} = C_{f2} - R_{f2} cos(2\pi f_2 t)$$

Where:

- $I(t)$ is the instantaneous intensity,
- $I_{MAX}$ is the maximum intensity value of the light beam that can be generated,
- $C_{f2}$ is the middle intensity,
- $R_{f2}$ is the range from the middle intensity of the intensity modulation, and
- $f_2$ is the frequency of the intensity modulation.

The middle intensity $C_{f2}$ is comprised between 0.3 and 0.6, preferably equal to 0.4 as in the present example.

The range from the middle intensity $R_{f2}$ is comprised between 0.2 and 0.4, preferably comprised equal to 0.3 as it is the case in this specific case.

The frequency of the intensity modulation $f_2$ is comprised between 0.05 Hz and 5 Hz, preferably comprised between 1 Hz and 4 Hz.

In this specific case, the amplitude of the intensity modulation $f_2$ is equal to 3 Hz.

At the end of the step for generating, an excitation light beam is thus available.

The optical system 14 conveys the excitation light beam to the sample 11.

More precisely, the laser light within the fiber 24 goes through the beam profiler 25 and the emitted light passes through the separator 26 as is has a lower wavelength than the cut-off wavelength.

The sample 11 is therefore illuminated by the excitation light beam and reacts to this excitation by emitting photoluminescence light with band gap energy higher than the cut-off wavelength.

The photoluminescence light is thus reflected by the separator 26 and sent to the detector 16.

During the step for detecting, the detector 16 detects this photoluminescence light by using the compound parabolic concentrator 28 of figure 1.

The photodetector 30 converts the detected photoluminescence light in an electrical signal.

During the step for determining, the processing unit 18 determines the phase shift between the excitation light beam and the collected photoluminescence light.

For this, the processing unit 18 compares the time delay between the command signal sent to the light source 20 with the electrical signal recorded by the photodetector 30 when receiving the detected photoluminescence light for each frequency emission and each intensity.

This time delay enables to obtain the phase shifts between the excitation light beam and the collected photoluminescence light at given instantaneous frequency emissions and intensities.

More precisely, the processing unit 18 calculates a measure of the correlation between the excitation light beam and the collected photoluminescence light in the time-frequency plane.

For this, the processing unit 18 calculates the magnitude-squared wavelet coherence between both signals. Wavelet coherence is indeed useful for analyzing nonstationary signals.

The magnitude-squared wavelet coherence of two series x and y can be expressed as:

$$\frac{\left| S\left( C_x^*(a,b) C_y(a,b) \right) \right|^2}{S(|C_x(a,b)|^2) . S\left( |C_y(a,b)|^2 \right)}$$

wherein:

- $C_x(a,b)$ and $C_y(a,b)$ denote the continuous wavelet transforms of $x$ and $y$ at scales $a$ and positions $b$,
- the superscript * is the complex conjugate, and
- S is a smoothing operator in time and scale.

For real real-valued time series, this expression is real-valued if a real-valued analyzing wavelet is used, and complex-valued if a complex-valued analyzing wavelet is used.

Then, the processing unit 18 cleans the obtained data. This results in a cleaned extracted phase shift.

According to the case, the processing unit 18 also applies one or more corrections, notably for the phase shift introduced by the amplifier 44 or the stretching out of the data due to the use of the wavelet coherence. During the step for deducing, the processing unit 18 deduces the effective electron lifetime based on each determined phase shift.

For this, the processing unit 18 applies formulas to the phase shift measurements, the relation between phase shift and effective electron lifetime being known.

As an example, an initial lifetime $\tau$ is calculated based on multiple phase shifts $\varphi$ of frequencies at a single laser intensity, according to the following formula:

$$\varphi = -\arctan(\omega\tau)$$

The final effective electron lifetime is then obtained through this iterative formula to determine a corrected lifetime.

$$\tau(G_i) = \tau_m(G_i)\left(1 - \varepsilon G_i \frac{d\tau}{d\Delta n}\right)$$

More details about this specific example (and notably the meaning of each variable) can be found in the following documents:

- an article by R. Brüggemann and S. Reynolds entitled "Modulated photoluminescence studies for lifetime determination in amorphous-silicon passivated crystalline-silicon wafers" Journal of Non-Crystalline Solids, volume 352, Issues 9-20, 2006, Pages 1888-1891, and
- the thesis by Johannes Giesecke entitled "Quantitative Recombination and Transport Properties in Silicon from Dynamic Luminescence" (2014).

The method therefore enables to obtain a value of the effective electron lifetime of the sample 11.

Such measurement advantageously use wavelets. Wavelets constitute a method which keeps frequency and time information of a signal. This allows for a signal with a changing frequency over time to be viewed in contrast to Fourier transform, which loses all time information. Wavelet coherence allows for determining the phase shift of a nonstationary process between two signals to determine the effective electron lifetime of a sample 11.

Such method enables to obtain phase shift measurements of the effective electron lifetime in a sample 11 in a rapid way.

As a specific example, the Applicant has succeeded in carrying out the measurement in an interval of time inferior to 2.5 seconds. More precisely, the Applicant has implemented the method for in-situ measurements on a PECVD reactor with measurement times reaching 0.5 seconds at its best.

Such method for measuring can be considered as a fast modulated photoluminescence technique, called Dolphin's Wave, using at least a frequency modulation, wavelets, and illumination intensity variation.

The method also provides with a good reliability in the measurement of the effective electron lifetime. Notably, the Applicant has obtained a repeatability of 1% to 3%.

Furthermore, this increase of the quality of measurement obtained with an easier implementation of the method for measuring since a simpler device for measuring 10 is implied. More specifically, no lock-in amplifier is required (as is the case with the use of a Fourier transform), contrary to classic devices implementing MPL technique.

Such method for determining the effective electron lifetime is therefore particularly appropriate for achieving quality control at each stage of a manufacturing of an electronic device, such as a photovoltaic cell.

Such method for may also advantageously used in an electrochemical impedance spectroscopy or in batteries.

Other embodiments of this method may also be considered.

For instance, the intensity modulation may present another shape, such as a triangular shape.

The frequency modulation also may present another shape such as a triangular shape or contain multiple shapes, which do not overlap the same frequencies.

At the step of deducing, other techniques can be considered, such as a gradient based algorithm.

Any possible technical combination of the previous features can be considered to form other embodiments included in the scope of the present claims.

**Claims**

1.   Method for measuring the effective electron lifetime in a sample (11), the method comprising:

- emitting an excitation light beam, the excitation light beam having a frequency modulated by a frequency modulation,
- detecting the photoluminescence light emitted by the sample (11) illuminated by the excitation light beam,
- determining the phase shift between the excitation light beam and the detected photoluminescence light for each frequency emission value, and
- deducing the effective electron lifetime based on each determined phase shift.

2. Method for measuring according to claim 1, wherein the frequency emission has at each time a value comprised between 200 Hz and 800 Hz, preferably between 215 Hz and 615 Hz.

3. Method for measuring according to claim 1 or 2, wherein the frequency modulation is a cosine modulation.

4. Method for measuring according to claim 3, wherein the frequency emission varies according to the following formula:

$$F_{freq}(t) = C_{f1} - R_{f1}cos(2\pi f_1 t)$$

where:

- $F_{freq}(t)$ is the frequency emission at a time t,
- $C_{f1}$ is the core frequency of the frequency emission,
- $R_{f1}$ is the range from the core frequency of the frequency modulation, and
- $f_1$ is the frequency of the frequency modulation.

5. Method for measuring according to claim 4, wherein the core frequency $C_{f1}$ is comprised between 300 Hz and 600 Hz, the range from the core frequency $R_{f1}$ is comprised between 200 Hz and 500 Hz, preferably and the frequency $f_1$ of the frequency modulation is comprised between 0.05 Hz and 10 Hz.

6. Method for measuring according to any one of claims 1 to 5, wherein the light beam has an intensity modulated by an intensity modulation and during the step for determining, the phase shift between the excitation light beam and the detected photoluminescence light is determined both for each frequency emission value and for each intensity value.

7. Method for measuring according to claim 6, wherein the intensity modulation is a cosine modulation.

8. Method for measuring according to claim 7, wherein the intensity varies according to the following formu-

la:

$$\frac{I(t)}{I_{MAX}} = C_{f2} - R_{f2}cos(2\pi f_2 t)$$

where:

- $I(t)$ is the instantaneous intensity,
- $I_{max}$ is the maximum intensity value of the light beam that can be generated,
- $C_{f2}$ is the middle intensity,
- $R_{f2}$ is the range from the middle intensity of the intensity modulation, and
- $f_2$ is the frequency of the intensity modulation.

9. Method for measuring according to claim 8, the middle intensity $C_{f2}$ is comprised between 0.3 and 0.6, the range from the middle intensity $R_{f2}$ is comprised between 0.2 and 0.4 and the frequency of the intensity modulation $f_2$ is comprised between 0.05 Hz and 5 Hz.

10. Method for measuring according to any one of claims 1 to 9, wherein the step for deducing comprises using a wavelet transform.

11. Method for measuring according to claim 10, wherein the step for deducing comprises calculating a correlation between the excitation light beam and the detected photoluminescence light.

12. Method for measuring according to claim 10 or 11, wherein the step for deducing comprises calculating a magnitude-squared wavelet coherence between the excitation light beam and the detected photoluminescence light.

13. Method for measuring according to any one of the claims 1 to 12, wherein the step for detecting is carried out by a detector (16) comprising a compound parabolic concentrator (28).

14. Method for measuring according to any one of the claims 1 to 13, wherein the sample (11) is an area of interest of a circuitry.

15. Device for measuring (10) the effective electron lifetime in a sample (11), the device for measuring (10) comprising:

- a light source (20) adapted to emit a an excitation light beam, the excitation light beam having a frequency emission modulated by a modulation, the frequency emission having a value comprised between 200 Hz and 600 Hz,
- a detector (16) adapted to detect the photoluminescence light beam emitted by the sample (11) illuminated by the excitation light beam, and
- a processing unit (18) adapted to:

　　- determine the phase shift between the excitation light beam and the detected photoluminescence light for each frequency emission value, and
　　- deduce the effective electron lifetime based on each determined phase shift.

**Amended claims in accordance with Rule 137(2) EPC.**

1.　Method for measuring the effective electron lifetime in a sample (11), the method comprising:

　　- emitting an excitation light beam, the excitation light beam having a frequency modulated by a frequency modulation,
　　- detecting the photoluminescence light emitted by the sample (11) illuminated by the excitation light beam,
　　- determining the phase shift between the excitation light beam and the detected photoluminescence light for each frequency emission value, and
　　- deducing the effective electron lifetime based on each determined phase shift,

　　wherein the frequency modulation is a cosine modulation and/or the light beam has an intensity modulated by an intensity modulation.

2.　Method for measuring according to claim 1, wherein the frequency emission has at each time a value comprised between 200 Hz and 800 Hz, preferably between 215 Hz and 615 Hz.

3.　Method for measuring according to claim 1 or 2, wherein the frequency emission varies according to the following formula:

$$F_{freq}(t) = C_{f1} - R_{f1}cos(2\pi f_1 t)$$

　　where:

　　　• $F_{freq}(t)$ is the frequency emission at a time t,
　　　• $C_{f1}$ is the core frequency of the frequency emission,
　　　• $R_{f1}$ is the range from the core frequency of the frequency modulation, and
　　　• $f_1$ is the frequency of the frequency modulation.

4.　Method for measuring according to claim 3, wherein the core frequency $C_{f1}$ is comprised between 300 Hz and 600 Hz, the range from the core frequency

$R_{f1}$ is comprised between 200 Hz and 500 Hz, preferably and the frequency $f_1$ of the frequency modulation is comprised between 0.05 Hz and 10 Hz.

5.　Method for measuring according to any one of claims 1 to 4, wherein the light beam has an intensity modulated by an intensity modulation and during the step for determining, the phase shift between the excitation light beam and the detected photoluminescence light is determined both for each frequency emission value and for each intensity value.

6.　Method for measuring according to claim 5, wherein the intensity modulation is a cosine modulation.

7.　Method for measuring according to claim 6, wherein the intensity varies according to the following formula:

$$\frac{I(t)}{I_{MAX}} = C_{f2} - R_{f2}cos(2\pi f_2 t)$$

　　were:

　　　• $I(t)$ is the instantaneous intensity,
　　　• $I_{MAx}$ is the maximum intensity value of the light beam that can be generated,
　　　• $C_{f2}$ is the middle intensity,
　　　• $R_{f2}$ is the range from the middle intensity of the intensity modulation, and
　　　• $f_2$ is the frequency of the intensity modulation.

8.　Method for measuring according to claim 7, the middle intensity $C_{f2}$ is comprised between 0.3 and 0.6, the range from the middle intensity $R_{f2}$ is comprised between 0.2 and 0.4 and the frequency of the intensity modulation $f_2$ is comprised between 0.05 Hz and 5 Hz.

9.　Method for measuring according to any one of claims 1 to 8, wherein the step for deducing comprises using a wavelet transform.

10.　Method for measuring according to claim 9, wherein the step for deducing comprises calculating a correlation between the excitation light beam and the detected photoluminescence light.

11.　Method for measuring according to claim 9 or 10, wherein the step for deducing comprises calculating a magnitude-squared wavelet coherence between the excitation light beam and the detected photoluminescence light.

12.　Method for measuring according to any one of the claims 1 to 11, wherein the step for detecting is carried out by a detector (16) comprising a compound

**EP 4 257 958 A1**

parabolic concentrator (28).

13. Method for measuring according to any one of the claims 1 to 12, wherein the sample (11) is an area of interest of a circuitry.

14. Device for measuring (10) the effective electron lifetime in a sample (11), the device for measuring (10) comprising:

   - a light source (20) adapted to emit a an excitation light beam, the excitation light beam having a frequency emission modulated by a modulation, the frequency emission having a value comprised between 200 Hz and 600 Hz,
   - a detector (16) adapted to detect the photoluminescence light beam emitted by the sample (11) illuminated by the excitation light beam, and
   - a processing unit (18) adapted to:

      - determine the phase shift between the excitation light beam and the detected photoluminescence light for each frequency emission value, and
      - deduce the effective electron lifetime based on each determined phase shift

   wherein the frequency modulation is a cosine modulation and/or the light beam has an intensity modulated by an intensity modulation.

FIG.1

# FIG.2

Europäisches
Patentamt

European
Patent Office

Office européen
des brevets

# EUROPEAN SEARCH REPORT

Application Number

EP 22 30 5453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHOI KWAN BUM ET AL: "Modulated Photoluminescence Lifetime Measurement of Bifacial Solar Cells", IEEE JOURNAL OF PHOTOVOLTAICS, IEEE, vol. 7, no. 6, 1 November 2017 (2017-11-01), pages 1687-1692, XP011672003, ISSN: 2156-3381, DOI: 10.1109/JPHOTOV.2017.2733163 [retrieved on 2017-10-23] | 1-5, 10-12, 14,15 | INV. G01N21/64 |
| A | * the whole document * | 6-9,13 | |
| X | EP 3 767 282 A1 (CENTRE NAT RECH SCIENT [FR] ET AL.) 20 January 2021 (2021-01-20) | 1-5, 10-15 | |
| A | * paragraphs [0017] – [0057]; claims; figures * | 6-9 | |

TECHNICAL FIELDS
SEARCHED      (IPC)

G01N

The present search report has been drawn up for all claims

| Place of search | Date of completion of the search | Examiner |
|---|---|---|
| Munich | 24 August 2022 | Politsch, Erich |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .................................................................

& : member of the same patent family, corresponding
document

EPO FORM 1503 03.82 (P04C01)

## EP 4 257 958 A1

## ANNEX TO THE EUROPEAN SEARCH REPORT
## ON EUROPEAN PATENT APPLICATION NO.

EP 22 30 5453

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2022

| Patent document cited in search report | | Publication date | Patent family member(s) | | Publication date |
|---|---|---|---|---|---|
| EP 3767282 | A1 | 20-01-2021 | EP | 3767282 A1 | 20-01-2021 |
| | | | FR | 3098913 A1 | 22-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. BRÜGGEMANN ; S. REYNOLDS.** Modulated photoluminescence studies for lifetime determination in amorphous-silicon passivated crystalline-silicon wafers. *Journal of Non-Crystalline Solids,* 2006, vol. 352 (9-20), 1888-1891

- **JOHANNES GIESECKE.** *Quantitative Recombination and Transport Properties in Silicon from Dynamic Luminescence,* 2014